# EUROPEAN PATENT SPECIFICATION

(11) **EP 3 150 333 B1**
(45) Date of publication and mention of the grant of the patent: **28.08.2019**
(21) Application number: 16190469.3
(22) Date of filing: 23.09.2016
(51) Int. Cl.: B24B 23/02, B25F 5/00, B23B 47/00, B23Q 11/00, F16D 59/02, B27B 17/08, B24B 47/26, B25B 21/00, B27B 5/38, F16D 55/16, F16D 65/18, F16D 121/16, F16D 121/14, B23Q 16/10, F16D 65/12

(54) **POWER TOOL WITH IMPROVED BRAKING DEVICE**
ELEKTROHANDWERKZEUG MIT EINER VERBESSERTEN BREMSANORDNUNG
OUTIL ELECTRIQUE PORTATIF COMPRENANT UN ENSEMBLE DE FREINAGE AMÉLIORÉ

(30) Priority: 30.09.2015 CN 201510641411; 28.12.2015 CN 201521117310 U
(43) Date of publication of application: 05.04.2017
(73) Proprietor: Chervon (HK) Limited, 999077 Hong Kong (CN)
(72) Inventor: ZHANG, Rui, Nanjing, 211106 (CN); GUAN, Xiangxin, Nanjing, 211106 (CN)
(74) Representative: Sun, Yiming

(56) References cited:
- EP-A1- 0 222 312
- EP-A1- 1 938 924
- EP-A2- 2 420 352
- WO-A1-2008/103079
- AT-B- 383 197
- AU-A1- 2007 201 914
- US-A- 2 408 179
- US-A1- 2002 066 632
- US-A1- 2013 292 148
- US-A1- 2014 069 756

## Description

### FIELD OF THE DISCLOSURE

The present disclosure relates generally to power tools and, more particularly, to a power tool with a brake function as known from EP 1 938 924 A1, which is the basis for the preamble of appended claim 1.

### BACKGROUND OF THE DISCLOSURE

Power tools, such as angle grinders, commonly include a brake mechanism for stopping an attachment such as a grinding disc from rotating after a user stops using, so as to protect the user.

Generally, the brake includes electric brake and mechanical brake. The electric brake has some limits and easily damages a motor. While the mechanical brake is direct and reliable.

Currently known mechanical brakes carry out the brake through an elastic element driving a brake plate to contact something. However, in order to arrange the brake plate and the elastic element and leave enough strokes at the same time, power tools with mechanical brake commonly have a complex assembly and, the mechanical brake occupies large space. Further, known mechanical brakes have short use life and long brake time.

### SUMMARY

The above mentioned shortcomings are overcome by the present invention, which provides a power tool as defined by the appended claims, which includes a housing, a main shaft being capable of rotating about a first axis, which is formed with or fixedly connected with a brake disc, and a brake leaf spring for contacting with the brake disc so as to brake the main shaft. The brake leaf spring includes fixed portions fixedly connected with the housing, a moving portion being capable of moving relative to the housing, which is mounted with a friction plate thereon. When the moving portion is in a first position, the friction plate is disengaged with the brake disc, when the moving portion is in a second position, the friction plate is contacted with the brake disc. The moving portion can be moved from the first position to the second position under the action of a biasing force of the brake leaf spring.

Further areas of applicability will become apparent from the description provided herein. It should be understood that the description and specific examples are intended for purposes of illustration only and are not intended to limit the scope of the present invention, which is defined by the appended claims.

### BRIEF DESCRIPTION OF THE DRAWINGS

FIG. 1 is a schematic view of a power tool according to the present invention.
FIG. 2 a schematic view of a transmission mechanism and an output mechanism of the power tool in FIG.1.
FIG. 3 is a cross-section view of a brake leaf spring and a main shaft in FIG.2.
FIG. 4 is an exploded view of the brake leaf spring and the main shaft in FIG.2.
FIG. 5 is an exploded view of a part of a power tool in a second embodiment of the present invention.
FIG. 6 is a cross-section view of the power tool in FIG. 5.
FIG. 7 is a cross-section view of a main shaft and a friction plate in FIG. 6.
FIG. 8 is a front view of a brake leaf spring in FIG. 5, wherein the friction plate is mounted on one side of the main shaft which is departed from fixed portions.
FIG. 9 is another front view of the brake leaf spring in FIG. 5, wherein the friction plate is mounted on the other side of the main shaft which is close to the fixed portions.
FIG. 10 is another front view of the brake leaf spring in FIG. 5, wherein more than two friction plates are mounted on the brake leaf spring.
FIG. 11 is a schematic view of a power tool in a third embodiment of the present invention.

The drawings described herein are for illustrative purposes only of selected embodiments and not all possible implementations, and are not intended to limit the scope of the present invention, which is defined by the appended claims. Corresponding reference numerals indicate corresponding parts throughout the several views of the drawings.

### DETAILED DESCRIPTION

The following description of the preferred embodiments is merely exemplary in nature and is in no way intended to limit the invention, which is defined by the appended claims, its application, or uses.

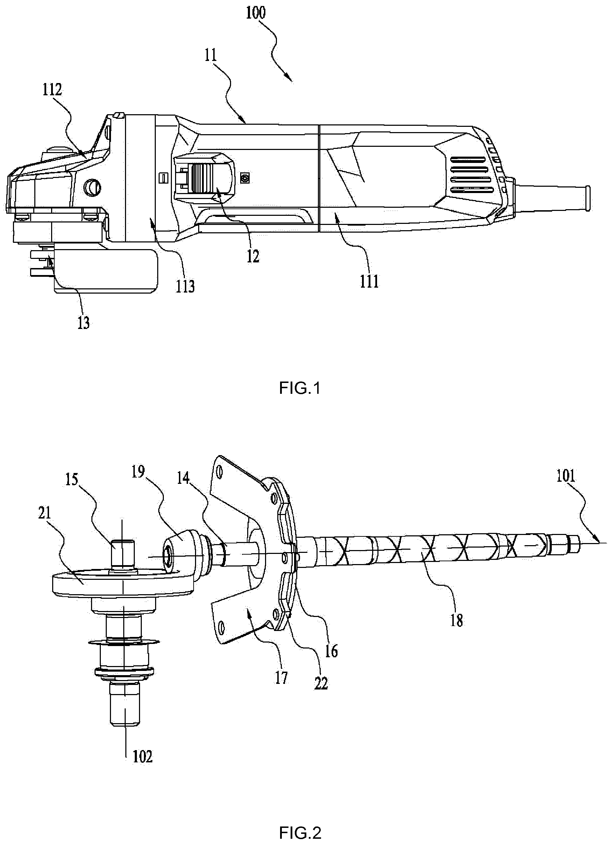

As shown in FIG. 1, a power tool 100 in a preferred embodiment includes a housing 11, an operating switch 12, a prime mover, a transmission mechanism and an output mechanism 13. As shown in FIG. 2, the transmission mechanism includes a main shaft 14. The output mechanism 13 includes an output shaft 15. The main shaft 14 is formed with or fixedly connected with a brake disc 16. The power tool 100 further includes a brake leaf spring 17 for contacting with the brake disc 16 so as to brake the main shaft 14.

For illustrating conveniently, the power tool 100 takes an angle grinder as an example. However, the power tool 100 may be other hand-held grinding tools, for example, a sander. Or, the power tool 100 may be used to output torque, for example, a screw driver or a multi-function power tool which can act as a screw driver and a drill. Or, the power tool 100 may be used to cut workpiece, for example, a reciprocating saw, a circular saw and a jig saw. The power tool 100 further may be used to output impact force, for example, an electric hammer. The power tool 100 further may be a gardening tool, for example, a hedge trimmer and a chain saw. Otherwise, the power tool 100 further may have other use, for example, a blender.

If only these power tools 100 have a rotatable main shaft 14, they can use the technology described as following.

As shown in FIG. 1, the housing 11 is configured to contain all the components inside the power tool 100, for example, the prime mover, the transmission mechanism, and so on. The housing 11 is also capable of containing a part of the output shaft 15. The housing 11 includes a handle portion 111, an output portion 112 and a connecting portion 113.

The handle portion 111 is used for a user to grip, which is formed with a containing space therein for containing the prime mover. The output portion 112 is used to contain the output mechanism 13. The output portion 112 is at least partially open on its one side so that the output mechanism 13 can partially extend out of the housing 11. The connecting portion 113 is disposed between the handle portion 111 and the output portion 112 and fixedly connected with the handle portion 111 and the output portion 112, so they three constitute an entirety being capable of moving together.

The operating switch 12 can be mounted on the handle portion 111 of the housing 11, which can be used to activate a main switch of the prime mover. Thus, the user can actuate the operating switch 12 conveniently when he grips the handle portion 111.

The prime mover is contained within the containing space formed by the handle portion 111. For the angle grinder, the prime mover can be a motor. As shown in FIG. 2, the motor includes a motor shaft 18 which can drive the main shaft 14 to rotate about a first axis 101. It is noted that, the main shaft 14 can be fixedly connected with the motor shaft 18, or the main shaft 14 can be formed by the motor shaft 18.

The transmission mechanism includes the main shaft 14, and further includes a first bevel gear 19. The first bevel gear 19 is rotated synchronously with the main shaft 14, that means, when one of the first bevel gear 19 and the main shaft 14 is rotated, the other is rotated, and when one of them is braked, the other is braked. This synchronizing meaning is also adapted to other components in the description which can rotate synchronously.

The output mechanism 13 includes the output shaft 15, and further includes a second bevel gear 21. The second bevel gear 21 is rotated synchronously with the output shaft 15. The output shaft 15 has an extending direction which is substantially perpendicular to an extending direction of the main shaft 14. For the angle grinder, the output shaft 15 can be used to fix a grinding disc and other tools so as to realize a grinding function, a cutting function and so on. The second bevel gear 21 is engaged with the first bevel gear 19, so that the power can be transferred from the prime mover to the output shaft 15 through the main shaft 14, the first bevel gear 19 and the second bevel gear 21, and the output shaft 15 is driven to rotate about a second axis 102 which is substantially perpendicular to the first axis 101.

The brake leaf spring 17 is described in detail as following.

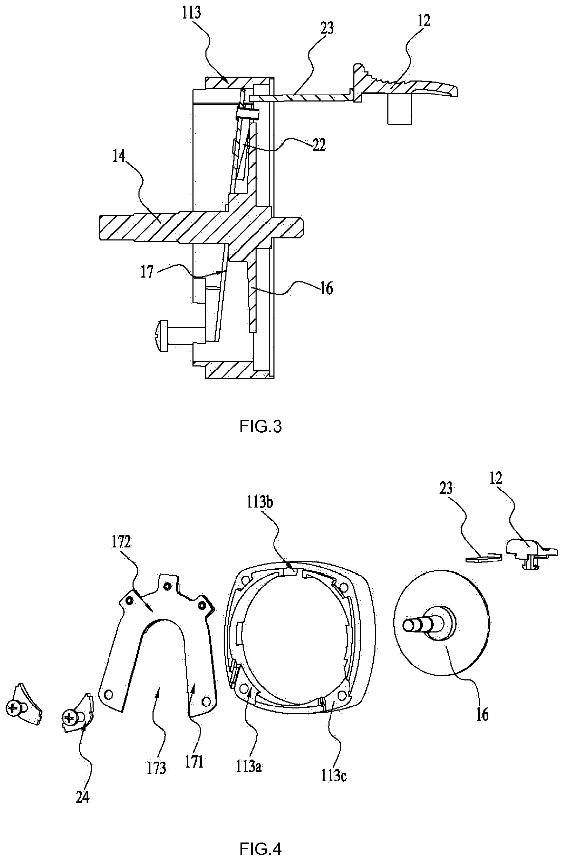

Referring to FIGS. 3-4, the main shaft 14 is formed with or fixedly connected with the brake disc 16, and the brake disc 16 is rotated synchronously with the main shaft 14. The brake disc 16 is disposed between the brake leaf spring 17 and the prime mover, which is a disc surrounding the main shaft 14. The brake disc 16 has a disc direction which is substantially perpendicular to the main shaft 14. In a direction of the first axis 101, the brake disc 16 is disposed between the brake leaf spring 17 and the handle portion 111.

The brake leaf spring 17 includes a fixed portion 171 and a moving portion 172. The moving portion 172 is fixedly connected with a friction plate 22.

Specifically, the fixed portion 171 is fixedly connected with the connecting portion 113 of the housing 11. For the brake leaf spring 17, it includes two fixed portions 171 which are disposed on two sides of the moving portion 172. The brake leaf spring 17 has a U shape approximately as a whole. The U shape has an opening which broadens gradually.

The moving portion 172 is capable of moving relative to the connecting portion 113 of the housing 11 and at least has a first position and a second position during moving. When the moving portion 172 is in the first position, the friction plate 22 is in a release position and disengaged with the brake disc 16. When the moving portion 172 is in the second position, the friction plate 22 is in a brake position and contacted with the brake disc 16, and a friction force produced by the friction plate 22 is acted on the brake disc 16, so the brake disc 16 is braked. The friction plate 22 is fixedly connected with the moving portion 172, so the moving portion 172 moving between the first and second positions relative to the housing 11 makes the friction plate 22 move between the release position and the brake position relative to the housing 11. Here, the moving portion 172 is a portion which can move relative to the housing 11, or a portion which can mount the friction plate 22 and make the friction plate 22 contact with or disengage with the brake disc 16 when it is moved.

The brake leaf spring 17 further includes a passing portion 173 allowing the main shaft 14 to pass through. The passing portion 173 can be a gap disposed between the two fixed portions 171, or a through hole.

The friction plate 22 is disposed on a side of the brake leaf spring 17 that faces the brake disc 16, and also disposed between the brake leaf spring 17 and the brake disc 16. The friction plate 22 is provided with uneven particles on its side facing the brake disc 16 for increasing friction coefficient.

The connecting portion 113 is formed with a pair of recesses 113a. The two fixed portions 171 are respectively embedded in the pair of recesses 113a. The fixed portions 171 is fixedly connected with the connecting portion 113 by a pair of screws passing through the fixed portions 171 and extending in the recesses 113a.

The power tool 100 further includes a slider 23 which is slidably connected with the housing 11. The slider 23 has a sliding direction which is parallel to the main shaft 14 or parallel to the first axis 101 of the main shaft 14. The slider 23 can be contacted with the moving portion 172 on one end and connected with the operating switch 12 on the other end. The operating switch 12 is slidably connected with the housing 11. When the operating switch 12 slides to an on-position to start the prime mover, the slider 23 is driven to slide together by the operating switch 12 so as to drive the moving portion 172 to move to the first position and maintain in the first position, and the friction plate 22 is disengaged with the friction disc 16 at this moment. When the operating switch 12 slides to an off-position to shut down the prime mover, the slider 23 is driven to slide together by the operating switch 12 to disengage with the moving portion 172, and the moving portion 172 is moved from the first position to the second position under the action of a biasing force of the brake leaf spring 17 at this moment. Correspondingly, the friction plate 22 is moved from the release position to the brake position and contacted with the brake disc 16, so the brake disc 16 is braked.

The connecting portion 113 of the housing 11 is further formed with a guiding slot 113b. The moving portion 172 is embedded in the guiding slot 113b. The guiding slot 113b has an extending direction which is substantially parallel to the main shaft 14 and the first axis 101. The guiding slot 113b is capable of guiding the moving portion 172 to move between the first and second positions.

In order to make the brake leaf spring 17 move from the first position to the second position through its biasing force, the connecting portion 113 of the housing 11 is further formed with a pair of slopes 113c. The power tool 100 further includes a pair of mounting elements 24 which facilitate the mounting of the fixed portions 171 to the slopes 113c.

The slopes 113c are formed on the bottom of the recesses 113a of the connecting portion 113. Each slope 113c is in a plane which is obliquely intersected with the main shaft 14. Each mounting element 24 has a contacting surface which is parallel to the slope 113c. A pair of screws pass the mounting elements 24, the fixed portions 171 of the brake leaf spring 17 and the recesses 113a in turn, so that the brake leaf spring 17 is fixed obliquely between the contacting surfaces and the slopes 113c. When the operating switch 12 is in the off-position, the moving portion 172 and the fixed portions 171 are respectively located on two sides of a plane which is perpendicular to the main shaft 14, and the brake leaf spring 17 is obliquely intersected with the main shaft 14.

When the operating switch 12 is moved to the on-position, the moving portion 172 is driven by the slider 23 to move to the first position and, the brake leaf spring 17 stores elastic energy which can make the moving portion 172 trend to move to the second position. Once the operating switch 12 is moved to the off-position, the moving portion 172 is driven by the elastic energy to restore to the second position and, the brake leaf spring 17 releases the elastic energy.

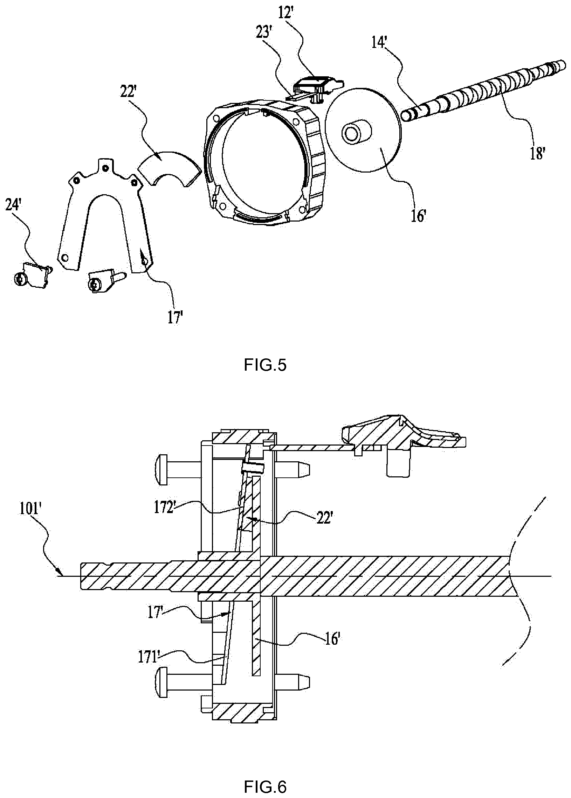

As shown in FIG. 5, in a second embodiment, a power tool includes a housing, an operating switch 12', an output mechanism, a main shaft 14', an output shaft, a brake disc 16', a brake leaf spring 17', a motor shaft 18', a first bevel gear, a second bevel gear, a slider 23' and mounting elements 24' which have the same structures as in the preferred embodiment. The difference between the second embodiment and the preferred embodiment is the structure and mounting position of a friction plate 22'. The power tool in the second embodiment can apply all other features in the preferred embodiment.

The difference between the second embodiment and the preferred embodiment is described in detail as following.

As shown in FIG. 6, the friction plate 22' in the second embodiment has at least two different axial thicknesses. When the brake leaf spring 17' is in the position shown in FIG. 6, a moving portion 172' is in the second position. At this moment, the brake leaf spring 17' is obliquely intersected with a first axis 101', and a disc plane of the brake disc 16' is perpendicular to the first axis 101'. So, a space, which has an axial thickness changed gradually and slopes toward one direction, is formed between the brake leaf spring 17' and the brake disc 16'. Because the friction plate 22' has at least two different axial thicknesses, if only the axial thicknesses are designed reasonably, portions of the friction plate 22' having the two different axial thicknesses can contact with the disc plane of the brake disc 16'. Thus, the contact area between the friction plate 22' and the brake disc 16' is increased, and the brake speed is quickened.

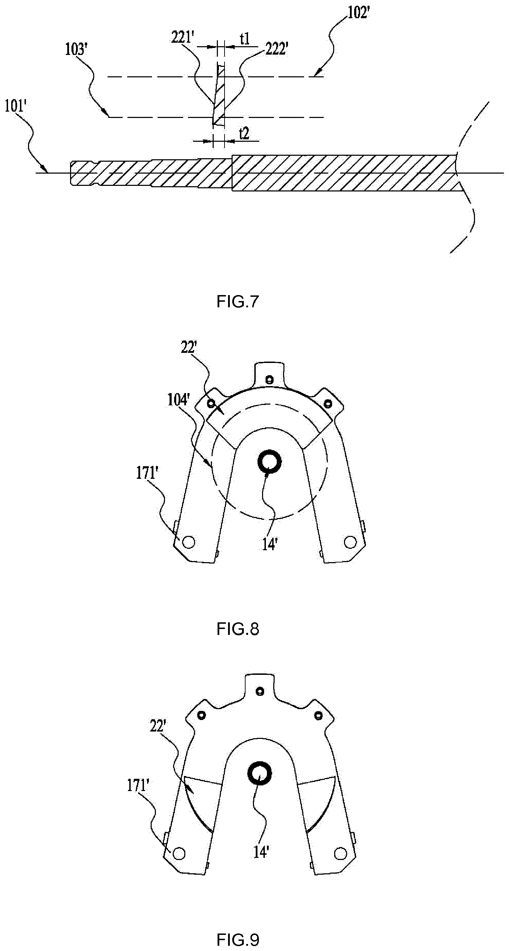

Here, the axial thickness is further defined. As shown in FIG. 7, in a first linear direction 102' of the first axis 101', a thickness t1 of the friction plate 22' in the first linear direction 102' is the axial thickness of the friction plate 22' in the first linear direction 102'. As mentioned above, the friction plate 22' has at least two different axial thicknesses. That is, the friction plate 22' has another thickness t2 in a second linear direction 103' which is parallel to the first axis 101'. The thickness t2 is different from the thickness t1.

Referring to FIGS. 5-7, the friction plate 22' is formed with a mounting surface 221' and a brake surface 222' which are disposed oppositely. The mounting surface 221' is contacted with the moving portion 172' for fixing the friction plate 22' to the moving portion 172'. The brake surface 222' is a surface of the friction plate 22' facing the brake disc 16'. When the friction plate 22' is in the brake position, the brake surface 222' is contacted with the disc plane of the brake disc 16' so as to realize the brake. A first plane where the brake surface 222' is in is obliquely intersected with a second plane where the mounting surface 221' is in. An angle between the first and second planes is greater than or equal to 3 degree and less than or equal to 15 degrees. The angel can be jointly determined by the size of a handle portion or a connecting portion of the housing in a direction perpendicular to the first axis 101' and a moving range of the moving portion 172' of the brake leaf spring 17' in the direction of the first axis 101'. So, because the brake surface 222' is obliquely intersected with the mounting surface 221', the friction plate 22' has gradually changing axial thicknesses. If only the angle between the brake surface 222' and the mounting surface 221' is designed reasonably, the brake surface 222' of the friction plate 22' can fit the disc plane of the brake disc 16' completely.

If the friction plate 22' is provided with uneven particles on its side facing the brake disc 16', it is contemplated that, when the friction plate 22' is in the brake position and contacted with the brake disc 16', a surface formed by the uneven particles and contacted with the brake disc 16' can be considered as the brake surface 222' of the friction plate 22'.

Alternatively, in a direction from the moving portion 172' to the fixed portion 171', the axial thickness of the friction plate 22' is increased gradually. Thus, the change of the axial thickness of the friction plate 22' can match the change of the axial thickness of the space between the brake leaf spring 17' and the brake disc 16'.

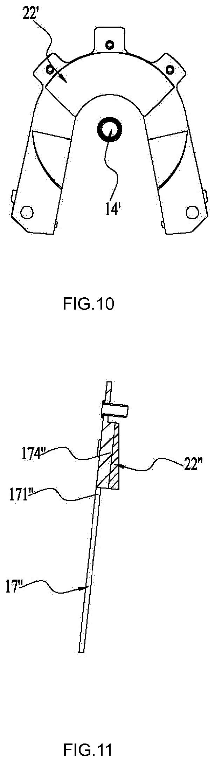

As shown in FIG. 8, alternatively, the friction plate 22' can be disposed on one side of the main shaft 14' which is departed from the fixed portions 171'. Thus, when the slider 23' slides, the friction plate 22' has larger moving space in the axial direction, which facilitates the switch between the brake position and the release position. As shown in FIG. 9, the friction plate 22' also can be disposed on the other side of the main shaft 14' which is close to the fixed portions 171'. As shown in FIG. 10, the number of the friction plate 22' can be more than one, for example, two or more. The two friction plates 22' can be disposed on the two sides of the main shaft 14' respectively. Thus, the friction area of the friction plates 22' is increased. The brake speed is quickened, and the friction of single friction plate 22' is reduced, which elongates the use life of the friction plate 22'.

As shown in FIG. 8, alternatively, in a circumferential direction which centers on the first axis 101', for example, a circumference 104', the friction plate 22' has a radian on the circumference 104' which is greater than or equal to 1 and less than or equal to 3. Thus, the friction area is further increased. The brake speed is quickened, and the friction of single friction plate 22' is reduced, which elongates the use life of the friction plate 22'.

As shown in FIG. 11, in a third embodiment, a power tool includes a housing, an operating switch, an output mechanism, a main shaft, an output shaft, a brake disc, a brake leaf spring, a motor shaft, a first bevel gear, a second bevel gear, a slider and mounting elements which have the same structures as in the preferred embodiment and second embodiment. The difference between the third embodiment and the preferred and second embodiments is the structure of the brake leaf spring 17" and the friction plate 22". The power tool in the third embodiment can apply all other features in the preferred and second embodiments.

The difference between the third embodiment and the preferred and second embodiments is described in detail as following.

The brake leaf spring 17" is provided with a protruding portion 174" on its one side facing the brake disc. The protruding portion 174" is extended toward the brake disc. The friction plate 22" is mounted on the protruding portion 174". The friction plate 22" and the protruding portion 174" constitute an entirety which has at least two different axial thicknesses. Thus, the contact area of the friction plate 22" and the brake disc is increased, and the brake speed is quickened.

The above illustrates and describes basic principles, main features and advantages of the present invention. Those skilled in the art should appreciate that the above embodiments do not limit the present invention, which is defined by the appended claims.

## Claims

1. A power tool (100), comprising:
a housing (11);
a main shaft (14) being capable of rotating about a first axis (7),
a brake disc (16), wherein the shaft is formed with or fixedly connected with the brake disc; and
a brake spring (17, 17', 17") for contacting with the brake disc so as to brake the main shaft,
the brake spring comprising:
fixed portions (171) fixedly connected with the housing,
a moving portion (172) being capable of moving relative to the housing,
a friction plate (22, 22', 22") capable of engaging with the brake disc,
wherein when the moving portion is in a first position, the friction plate is disengaged with the brake disc, when the moving portion is in a second position, the friction plate is contacted with the brake disc, and wherein the moving portion of the brake spring is configured to be moved from the first position to the second position under the action of a biasing force of the brake spring,
**characterized in that**
the brake spring is a brake leaf spring, and
the moving portion is mounted with the friction plate fixed thereon.

2. The power tool of claim 1, further comprises a slider (23) being capable of maintaining the moving portion in the first position and, the slider is slidably connected with the housing.

3. The power tool of claim 2, wherein the slider has a sliding direction which is substantially parallel to the first axis.

4. The power tool of claim 1, wherein the housing is formed with a guiding slot (113b) allowing the moving portion to embed therein, and wherein the guiding slot is substantially parallel to the first axis.

5. The power tool of claim 1, wherein the housing is formed with a handle portion (11) for a user to grip and, the brake disc is disposed between the brake leaf spring and the handle portion in a direction of the first axis.

6. The power tool of claim 1, wherein the brake leaf spring is provided with a passing portion (173) allowing the main shaft to pass through.

7. The power tool of claim 6, wherein the housing is formed with slopes (113c) and, planes where the slopes are in are obliquely intersected with the main shaft; the power tool further comprises mounting elements (5) which facilitate the mounting of the fixed portions to the slopes and, the brake leaf spring is disposed between the mounting elements and the slopes.

8. The power tool of claim 1, wherein when the moving portion (172) is in the first position, the brake leaf spring stores elastic energy, when the moving portion is in the second position, the brake leaf spring releases elastic energy.

9. The power tool of claim 1, wherein the friction plate (22') is capable of being driven by the brake leaf spring (17') to move to a brake position and a release position relative to the housing; when the friction plate is moved to the brake position, the friction plate is contacted with the brake disc, when the friction plate is moved to the release position, the friction plate is disengaged with the brake disc; the friction plate is capable of moving from the release position to the brake position under the action of a biasing force of the brake leaf spring, the friction plate has at least two different axial thicknesses in a direction of the first axis.

10. The power tool of claim 9, wherein the friction plate is disposed between the brake leaf spring and the brake disc.

11. The power tool of claim 10, wherein the friction plate is formed with:
a brake surface (222') for contacting with the brake disc when the friction plate is in the brake position; and
a mounting surface (221') disposed oppositely relative to the brake surface, wherein the mounting surface is contacted with the moving portion, a first plane where the brake surface is in is obliquely intersected with the a second plane where the mounting surface is in.

12. The power tool of claim 11, wherein an angle between the first and second planes is greater than or equal to 3 degree and less than or equal to 15 degrees.

13. The power tool of claim 9, wherein the friction plate has a radian which is greater than or equal to 1 and less than or equal to 3 in a circumference centering on the first axis.

14. The power tool of claim 9, wherein the axial thicknesses of the friction plate is increased gradually in a direction from the moving portion to the fixed portions.

15. The power tool of claim 1, wherein the friction plate is disposed on one side of the brake disc;
the brake leaf spring (17") is capable of driving the friction plate to move to a brake position and a release position;
when the friction plate (22") is moved to the brake position, the friction plate is contacted with the brake disc, when the friction plate is moved to the release position, the friction plate is disengaged with the brake disc;
the moving portion is provided with a protruding portion (174") extending toward the brake disc, the friction plate is mounted on the protruding portion, the friction plate is capable of moving from the release position to the brake position under the action of a biasing force of the brake leaf spring, the friction plate and the protruding portion constitute an entirety which has at least two different axial thicknesses in a direction of the first axis.

## Patentansprüche

1. Elektrowerkzeug (100) umfassend:
ein Gehäuse (11);
eine Hauptwelle (14), die um eine erste Achse (7) drehbar ist,
eine Bremsscheibe (16),
wobei die Welle mit der Bremsscheibe ausgebildet oder fest verbunden ist; und eine Bremsfeder (17, 17', 17")
zum Kontaktieren der Bremsscheibe, um die Hauptwelle zu bremsen, wobei die Bremsfeder Folgendes umfasst:
feste Abschnitte (171), die fest mit dem Gehäuse verbunden sind,
wobei ein Bewegungsabschnitt (172) in der Lage ist, sich relativ zum Gehäuse zu bewegen,
eine Reibungsplatte (22, 22', 22"), die in der Lage ist, mit der Bremsscheibe in Eingriff zu kommen,
wobei, wenn sich der Bewegungsabschnitt in einer ersten Position befindet, die Reibungsplatte von der Bremsscheibe gelöst wird, wenn sich der Bewegungsabschnitt in einer zweiten Position befindet, die Reibungsplatte mit der Bremsscheibe in Kontakt gebracht wird, und wobei der Bewegungsabschnitt der Bremsfeder konfiguriert ist, um unter der Wirkung einer Vorspannkraft der Bremsfeder von der ersten Position in die zweite Position bewegt zu werden,
**dadurch gekennzeichnet, dass**
die Bremsfeder eine Bremsblattfeder ist und
der Bewegungsabschnitt mit daran befestigter Reibungsplatte montiert ist.

2. Elektrowerkzeug nach Anspruch 1, ferner umfassend einen Schieber (23), der in der Lage ist, den Bewegungsabschnitt in der ersten Position zu halten, und der Schieber ist verschiebbar mit dem Gehäuse verbunden.

3. Elektrowerkzeug nach Anspruch 2, wobei der Schieber eine Gleitrichtung aufweist, die im Wesentlichen parallel zur ersten Achse ist.

4. Elektrowerkzeug nach Anspruch 1, wobei das Gehäuse mit einem Führungsschlitz (113b) ausgebildet ist, der es dem Bewegungsabschnitt ermöglicht, sich darin einzubetten, und wobei der Führungsschlitz im Wesentlichen parallel zur ersten Achse ist.

5. Elektrowerkzeug nach Anspruch 1, wobei das Gehäuse mit einem Griffabschnitt (11) zum Greifen für einen Benutzer ausgebildet ist und die Bremsscheibe zwischen der Bremsblattfeder und dem Griffabschnitt in Richtung der ersten Achse angeordnet ist.

6. Elektrowerkzeug nach Anspruch 1, wobei die Bremsblattfeder mit einem Durchgangsabschnitt (173) versehen ist, durch den die Hauptwelle hindurchgehen kann.

7. Elektrowerkzeug nach Anspruch 6, wobei das Gehäuse mit Neigungen (113c) geformt ist und
Ebenen, in denen sich die Neigungen befinden, schräg mit der Hauptwelle verbunden sind;
wobei das Elektrowerkzeug ferner Befestigungselemente (5) umfasst, die die Montage der festen Abschnitte an den Neigungen erleichtern, und die Bremsblattfeder zwischen den Befestigungselementen und den Neigungen angeordnet ist.

8. Elektrowerkzeug nach Anspruch 1, wobei, wenn sich der Bewegungsabschnitt (172) in der ersten Position befindet, die Bremsblattfeder elastische Energie speichert, wenn sich der Bewegungsabschnitt in der zweiten Position befindet, die Bremsblattfeder elastische Energie freisetzt.

9. Elektrowerkzeug nach Anspruch 1, wobei die Reibungsplatte (22') durch die Bremsblattfeder (17') angetrieben werden kann, um sich in eine Bremsposition und eine Freigabeposition in Bezug auf das Gehäuse zu bewegen;
wenn die Reibungsplatte in die Bremsposition bewegt wird, wird die Reibungsplatte mit der Bremsscheibe kontaktiert, wenn die Reibungsplatte in die Freigabeposition bewegt wird, wird die Reibungsplatte von der Bremsscheibe gelöst;
die Reibungsplatte unter Einwirkung einer Vorspannkraft der Bremsblattfeder aus der Freigabeposition in die Bremsposition übergehen kann, wobei die Reibungsplatte mindestens zwei verschiedene axiale Dicken in Richtung der ersten Achse aufweist.

10. Elektrowerkzeug nach Anspruch 9, wobei die Reibungsplatte zwischen der Bremsblattfeder und der Bremsscheibe angeordnet ist.

11. Elektrowerkzeug nach Anspruch 10, wobei die Reibungsplatte mit Folgendem gebildet ist:
einer Bremsfläche (222') zum Kontaktieren der Bremsscheibe, wenn sich die Reibungsplatte in der Bremsposition befindet; und
einer Montagefläche (221'), die gegenüber der Bremsfläche angeordnet ist,
wobei die Montagefläche mit dem Bewegungsabschnitt kontaktiert wird, wobei eine erste Ebene, in der sich die Bremsfläche befindet, schräg mit der zweiten Ebene, in der sich die Montagefläche befindet, verbunden ist.

12. Elektrowerkzeug nach Anspruch 11, wobei ein Winkel zwischen der ersten und zweiten Ebene größer oder gleich 3 Grad und kleiner oder gleich 15 Grad ist.

13. Elektrowerkzeug nach Anspruch 9, wobei die Reibungsplatte ein Bogenmaß aufweist, das größer oder gleich 1 und kleiner oder gleich 3 in einem Umfang ist, der auf die erste Achse zentriert ist.

14. Elektrowerkzeug nach Anspruch 9, wobei die axialen Dicken der Reibungsplatte allmählich in einer Richtung vom Bewegungsabschnitt zu den festen Abschnitten erhöht werden.

15. Elektrowerkzeug nach Anspruch 1, wobei die Reibungsplatte auf einer Seite der Bremsscheibe angeordnet ist;
die Bremsblattfeder (17") in der Lage ist, die Reibungsplatte anzutreiben, um sich in eine Bremsposition und eine Freigabeposition zu bewegen;
wenn die Reibungsplatte (22") in die Bremsposition bewegt wird, wird die Reibungsplatte mit der Bremsscheibe kontaktiert, wenn die Reibungsplatte in die Freigabeposition bewegt wird, wird die Reibungsplatte von der Bremsscheibe gelöst;
der Bewegungsabschnitt mit einem vorstehenden Abschnitt (174") versehen ist, der sich in Richtung der Bremsscheibe erstreckt, die Reibungsplatte auf dem vorstehenden Abschnitt montiert ist, die Reibungsplatte in der Lage ist, sich unter der Einwirkung einer Vorspannkraft der Bremsblattfeder von der Freigabeposition in die Bremsposition zu bewegen, die Reibungsplatte und der vorstehende Abschnitt eine Gesamtheit bilden, die mindestens zwei verschiedene axiale Dicken in Richtung der ersten Achse aufweist.

## Revendications

1. Outil électrique (100) comprenant :
un logement (11) ;
un arbre principal (14) étant capable de tourner sur un premier axe (7),
un disque de frein (16),
dans lequel l'arbre est formé avec le, ou est relié fixement, au disque de frein ; et un ressort de frein (17, 17', 17")
pour être en contact avec le disque de frein de façon à freiner l'arbre principal, le ressort de frein comprenant :
des parties fixes (171) connectées fixement au logement,
une partie mobile (172) étant capable de se déplacer par rapport au logement,
une plaque à friction (22, 22', 22") capable de s'engager avec le disque de frein,
dans lequel lorsque la partie mobile est dans une première position, la plaque à friction est désengagée du disque de frein, lorsque la partie mobile est dans un second état, la plaque à friction est en contact avec le disque de frein, et dans lequel la partie mobile du ressort de disque est configurée pour être déplacée de la première position à la seconde position sous l'action d'une force de décalage du ressort de frein,
**caractérisé en ce que**
le ressort de frein est un ressort de frein à lames, et
la partie mobile est montée avec la plaque à friction fixée dessus.

2. Outil électrique selon la revendication 1, comprenant en outre un curseur (23) étant capable de maintenir la partie mobile dans la première position et le curseur est connecté en coulissement avec le logement.

3. Outil électrique selon la revendication 2, dans lequel le curseur a une direction de coulissement qui est essentiellement parallèle au premier axe.

4. Outil électrique selon la revendication 1, dans lequel le logement est formé avec une fente de guidage (113b) permettant à la partie mobile de s'encastrer dedans, et dans lequel la fente de guidage est essentiellement parallèle au premier axe.

5. Outil électrique selon la revendication 1, dans lequel le logement est formé avec une partie de poignée (11) pour qu'un utilisateur l'empoigne et le disque de frein est disposé entre le ressort de frein à lames et la partie de poignée dans une direction du premier axe.

6. Outil électrique selon la revendication 1, dans lequel le ressort de frein à lames est doté d'une partie de passage (173) permettant à l'arbre principal de passer au travers.

7. Outil électrique selon la revendication 6, dans lequel le logement est formé avec des pentes (113c) et des plans où les pentes sont en intersection en oblique avec l'arbre principal ;
l'outil électrique comprend en outre des éléments de montage (5) qui facilitent le montage des parties fixes sur les pentes et le ressort de frein à lames est disposé entre les éléments de montage et les pentes.

8. Outil électrique selon la revendication 1, dans lequel lorsque la partie mobile (172) est dans la première position, le ressort de frein à lames stocke de l'énergie élastique, lorsque la partie mobile est dans la seconde position, le ressort de frein à lames libère de l'énergie élastique.

9. Outil électrique selon la revendication 1, dans lequel la plaque à friction (22') est capable d'être entraînée par le ressort de frein à lames (17') pour se déplacer vers une position de frein et une position de libération par rapport au logement ;
lorsque la plaque à friction est déplacée vers la position de frein, la plaque à friction est en contact avec le disque de frein, lorsque la plaque à friction est déplacée vers la position de libération, la plaque à friction est désengagée du disque de frein ;
la plaque à friction est capable de se déplacer de la position de libération à la position de frein sous l'action d'une force de décalage du ressort de frein à lames, la plaque à friction a au moins deux épaisseurs axiales différentes dans une direction du premier axe.

10. Outil électrique selon la revendication 9, dans lequel la plaque à friction est disposée entre le ressort de frein à lames et le disque de frein.

11. Outil électrique selon la revendication 10, dans lequel la plaque à friction est formée avec :
une surface de frein (222') pour être en contact avec le disque de frein lorsque la plaque à friction est dans la position de frein ; et
une surface de montage (221') disposée à l'opposé par rapport à la surface de frein,
dans lequel la surface de montage est en contact avec la partie mobile, un premier plan où la surface de frein est en intersection en oblique avec le second plan où la surface de montage est dedans.

12. Outil électrique selon la revendication 11, dans lequel un angle entre les premier et second plans est supérieur ou égal à 3 degrés et inférieur ou égal à 15 degrés.

13. Outil électrique selon la revendication 9, dans lequel la plaque à friction a un radian qui est supérieur ou égal à 1 et inférieur ou égal à 3 dans une circonférence se centrant sur le premier axe.

14. Outil électrique selon la revendication 9, dans lequel les épaisseurs axiales de la plaque à friction sont augmentées graduellement dans une direction de la partie mobile aux parties fixes.

15. Outil électrique selon la revendication 1, dans lequel la plaque à friction est disposée sur un côté du disque de frein ;
le ressort de frein à lames (17") est capable d'entraîner la plaque à friction pour le déplacement vers une position de frein et une position de libération ;
lorsque la plaque à friction (22") est déplacée vers la position de frein, la plaque à friction est en contact avec le disque de frein, lorsque la plaque à friction est déplacée vers la position de libération, la plaque à friction est désengagée du disque de frein ;
la partie mobile est dotée d'une partie en saillie (174") s'étendant en direction du disque de frein, la plaque à friction est montée sur la partie en saillie, la plaque à friction est capable de se déplacer de la position de libération à la position de frein sous l'action d'une force de décalage du ressort de frein à lames, la plaque à friction et la partie en saillie constituent une intégralité qui a au moins deux épaisseurs axiales différentes dans une direction du premier axe.
